Europäisches Patentamt

European Patent Office

Office européen des brevets

(11) Veröffentlichungsnummer: **0 350 595**

**A2**

(12) # EUROPÄISCHE PATENTANMELDUNG

(21) Anmeldenummer: **89108803.1**

(22) Anmeldetag: **17.05.89**

(51) Int. Cl.⁴: **G01J 1/42 , G01J 11/00 , G01S 7/48**

(30) Priorität: **14.07.88 CH 2710/88**

(43) Veröffentlichungstag der Anmeldung:
**17.01.90 Patentblatt 90/03**

(84) Benannte Vertragsstaaten:
**AT BE CH DE ES FR GB GR IT LI NL SE**

(71) Anmelder: **CONTRAVES AG**
**Schaffhauserstrasse 580**
**CH-8052 Zürich(CH)**

(72) Erfinder: **Pedrazza, Donatus**
**Hürststrasse 77**
**CH-8046 Zürich(CH)**

(54) Verfahren zum Messen schneller optischer Vorgänge und Vorrichtung dazu.

(57) Die wesentlichen Schritte des erfindungsgemässen Verfahrens zur Messung und Auswertung von Lichtfleck-Intensitätsprofilen, hier sind es Laserintensitätsprofile, sind folgende: Aus dem Strahlengang des kurzzeitigen optischen Ereignisses wird ein Teil der Energie ausgekoppelt und deren Energiedichte in zwei Raumrichtungen (vorzugsweise orthogonal zum Photoneneinfall) digitalisiert bzw. quantisiert. Das zur Lichtintensität proportionale Signal jedes Digits bzw. Quants wird gespeichert. Gleichzeitig ist auch die Gesamtenergie über dem gespeicherten Lichtfleck ermittelt worden. In einem nachfolgenenden Verfahrensschritt, wird aus diesen Informationen die Lichtverteilung auf einer Fläche gegenüber einer zu dieser Fläche nicht parallelen Achse abgebildet. Dieses eine Vorgehen liefert das gesuchte Intensitätsprofil, also die Energieverteilung über die Messfläche die bei dem kurzzeitigen optischen Ereignis eingefallen ist.

FIG. 1A

FIG. 1B

EP 0 350 595 A2

## VERFAHREN ZUM MESSEN SCHNELLER OPTISCHER VORGAENGE UND VORRICHTUNG ZUR MESSUNG DIESER VORGAENGE GEMAESS VERFAHREN

Die Erfindung liegt im Gebiet der Optik und betrifft ein Verfahren zum Messen schneller optischer Vorgänge und eine beispielsweise Vorrichtung an einem Justier- und Prüfgerät, insbesondere für Laser-Entfernungsmesser, gemäss Oberbegriff des unabhängigen Patentanspruchs für die Vorrichtung, mit welcher die Intensität einer kurzzeitigen Lichteinwirkung und die Energieverteilung auf einer Messfläche gemäss dem Verfahren gemessen werden kann.

Bekannt ist eine Justier- und Prüfeinrichtung für ein Laserentfernungsmesssystem durch die EP-0'048'015, bei der die Aufgabe gelöst wird, eine vor allem exakte Vermessung und Justierung der relevanten optischen Achsen, d.h. die genaue Ausrichtung der Parallelität der optischen Achsen von Lasersender und Laserempfänger zueinander und zu einer optischen Referenzachse mit einem kompakten Aufbau der Einrichtung und unter Umgehung von Freiraummessungen auszuführen. Der kompakte Aufbau besteht im wesentlichen aus einem Messkollimator, einem optischen und einem mechanischen Adapter zur Kopplung des Messgerätes an das Laserentfernungsmesssystem. Es ist klar, dass die Parallelität der optischen Achsen für die Messung entscheidend ist. Dies wird bei der bekannten Einrichtung da durch gelöst, dass der Kollimator im Messgerät als selbständige Einheit ausrichtbar ist, und das Messgerät zusammen mit einem ebenfalls ausrichtbaren, den Strahlengang verkürzenden, optischen Adapter auf einer gemeinsamen Tragkonstruktion angeordnet sind, wobei die Tragkonstruktion direkt an das Entfernungsmesssystem oder an dessen Tragkonstruktion angedockt wird. Damit ist die gesamte Einrichtung kompakt und beliebig ausrichtbar.

Das Ausrichten des Messgerätes über den optischen Adapter, welche beide gegeneinander und in Bezug zu einer Trägerplatte wiederum ausrichtbar sind und welche Trägerplatte frei verstellbar zu einem Laserdistanzmesser angeordnet werden kann, dient zur Vermessung der optischen Achsen für Sender und Empfänger einerseits und zur Messung oder Ueberprüfung der wichtigsten Systemkennwerte andererseits. Solche Systemkennwerte sind bspw. Sendestrahldivergenz, Sendefern- und Sendenahfeld, Leistung des Senders, Intensität, Entfernungsmessgenauigkeit, Systemempfindlichkeit etc., welche mit dem angekoppelten Messgerät und optischen Adapter ermittelt werden.

Wenn nun die Achsenvermessung im Dauerlicht, bspw. mit Hilfe von durchleuchteten Strichscheiben, noch unproblematisch ist, so ist die Messung der kurzzeitigen Phänomene wesentlich schwieriger. Distanzmessungen in der Grössenordnung von 1000 m und mehr erfordern eine hohe Laserleistung, welche nicht ohne weiteres im Dauerbetrieb abgegeben werden kann. Der Messlaser arbeitet deshalb in der Regel in diskontinuierlichem Betrieb und zwar sehr kurzzeitig. Solch ein kurzzeitiger Vorgang wird als Laserschuss bezeichnet und dauert nur wenige Nanosekunden. Sieht man von einer Attenuation der Laserleistung ab, so muss für die Messung der Systemkennwerte die volle Laserleistung in einem der Realität entsprechenden Betrieb abgegeben werden, das heisst, in Form von Laserschüssen.

Die möglichst exakte Messung und Auswertung dieser kurzzeitigen Phänomene ist Gegenstand der Erfindung. Aufgabe ist es, ein Verfahren zur exakten Messung der Intensität, Divergenz und Energieverteilung einer kurzzeitigen optischen Einwirkung, hier eines Laserblitzes anzugeben und eine Vorrichtung zur Durchführung des Verfahrens zu schaffen. Angewendet werden kann die Erfindung verfahrens- und vorrichtungsmässig an jeder Messeinrichtung bekannter Art, die zumindest eine Einrichtung zur Ausrichtung und Vermessung der optischen Achsen aufweist. Der abgegebene Lichtblitz, im sichtbaren und/oder unsichtbaren Spektralbereich, hier beispielsweise ein Laserblitz bzw. Laserschuss muss nicht notwendigerweise aus einem Laserentfernungsmessgerät stammen, doch wird er vorzugsweise in einem solchen verwendet.

Diese Aufgabe wird durch den im kennzeichnenden Teil des unabhängigen Verfahrensanspruchs und des unabhängigen Vorrichtungsanspruchs gelöst.

Das Verfahren besteht im wesentlichen darin, dass zur Herstellung von Lichtfleck-Intensitätsprofilen aus dem Strahlengang des kurzzeitigen optischen Ereignisses ein Teil der Energie ausgekoppelt und die Energiedichte in zwei Darstellungsrichtungen bspw. Raumrichtungen (vorzugsweise über einer orthogonal zum Photoneneinfall angeordneten Ebene) digitalisiert bzw. quantisiert und von einem weiteren Teil der Energie desselben Ereignisses, also gleichzeitig auch die Lichtleistung ermittelt und sie dem selben Ereignis zuzuordnen.

Es wird das zur Lichtintensität proportionale Signal jedes Digits bzw. Quants gespeichert und mit der Gesamtenergie über dem gespeicherten Lichtfleck in Beziehung gebracht. Aus diesen Informationen wird die Lichtverteilung auf einer Fläche gegenüber einer zu dieser Flä che nicht parallelen Achse abgebildet und damit das gesuchte Intensitätsprofil, also die Energieverteilung über die Messfläche die bei dem kurzzeitigen optischen Ereignis eingefallen ist, darstellt.

Wenn hier nun die Messung der Energieverteilung über eine bestimmte Messfläche zentraler Punkt der Diskussion ist und dies am Gegenstand eines Lasers diskutiert wird, so sei an dieser Stelle jedoch festgehalten, dass die Erfindung nicht nur bei parallelen, sondern auch bei quasiparallelen (bspw. Vollellipsoid) und fokussierenden Licht- bzw. Energiequellen angewendet werden kann.

Das kohärente Laserlicht hat bekanntlich einen sehr kleinen Dispersionswinkel. Das heisst, das Laserlicht divergiert sehr wenig und aus der Helligkeitsverteilung eines blitzartig auf einer kleinen Fläche auftreffenden Laserlichtflecks, eines sogenannten Laserspots lässt sich die Güte der Laseroptik beurteilen. Bekannt ist, die Helligkeit anhand einer Referenz zu beurteilen, das heisst, ein Lichtspot wird bspw. in ein variierbares Lichtfeld projiziert und dann das Lichtfeld solange variiert, bis der Blitz gerade noch erkannt wird. Damit hat man einen Vergleich, der aber in der Regel mit Hilfe des Auges herbeigeführt wird. Solcherart optischer Komparatoren sind schon lange bekannt, ein typischer Vertreter ist der Hellige-Komparator.

Obschon solche Methoden wenig aufwendig sind und sich auch bis heute bewährt haben, haben sie auch ihre Grenzen und weisen, wenn diese Grenzen überschritten werden (natürlich) Mängel auf. Es ist bspw. erkannt worden, dass die Referenzhelligkeit und ein gleich heller Lichtspot nicht gleich gesetzt werden können, wenn exakte Messungen ausgeführt werden sollen, da es dann auf die Helligkeitsverteilung eines Lichtspots ankommt. So können zum Beispiel syste matische Fehler nicht erkannt und damit ausgeschieden werden, wenn nicht absolut gemessen wird.

Dies gilt auch für eine 1982 erschienene Druckschrift unter dem Titel "Registration of a pulsed laser beam by a matrix or charge-coupled devices" (Instruments and Experimental Techniques, Vol.24 (1981), Nov.-Dec., No.6, Part 2, New-York), in der gezeigt wird, wie mittels eines Photoempfängers Laserimpulse aufgezeichnet werden können. Im Photoempfänger wird ein CCD-Array benutzt, welche damals gerade im Aufkommen waren. Diese Publikation befasst sich mit dem Problem der Aufzeichnung und weist darauf hin, dass Impuls-Laser über die Strahlintensität justiert werden können. Mit dieser instrumentellen Anordnung kann die Helligkeitsverteilung eines Lichtflecks sichtbar gemacht werden. Dies reicht jedoch zur vollständigen Bestimmung, das heisst möglichst exakten Beschreibung eines solchen Kurzzeiteffekts, nicht aus.

In der IEEE International Automatic Testing Conference von 1985 in Uniondale, New-York wurde unter dem Titel "Measurement of pulsed laser beam profiles during the initial fire period" eine Lösung vorgestellt, welche die Aufzeichnung von Laserschüssen auf einer Matrix-Anordnung (hier ist es eine Diodenmatrix) als Thema behandelte. Dabei wird der Laserstrahl in mehrere Komponenten aufgeteilt. Alle diese Komponenten werden auf einen Multiplexer geführt, an dessen Ausgang sequentiell ausgelesen und als unterschiedliche Parameter ausgewertet. Doch beziehen sich diese Werte letztlich nicht auf einen Puls, also ein "Pulsindividuum", sondern mehrere sequentiell eintreffende kurze Pulse. Man geht also stillschweigend davon aus, dass die Pulse innerhalb einer Pulsserie von gleicher Beschaffenheit (Gestalt) sind, was in der nachfolgend diskutierten Erfindung aber angezweifelt wird.

Diese Erkenntnis, nämlich die, dass jeder Puls, insbesondere bei Laserquellen hoher Leistung, ein charakteristischer, individueller Puls ist, führte zur Idee, das Einfallen von Lichtenergie als ein Paket von Energie-Partikeln aufzufassen und diesen Blitz entsprechend zu behandeln. So zielt das erfinderische Verfahren darauf ab, die Gestalt dieses ausgesandten Energiepartikel-Pakets festzuhalten und auszuwerten.

Die Helligkeitsverteilung eines Laserspots ist bei der Messung mit bekannten Sensoren ungefähr proportional zur Energieverteilung desselben. Der Photoneneinfall auf eine Fläche ist (auch bei Laserlicht) nur im Idealfall homogen. In der Regel wird die anfängliche Verteilung (bei einem Puls-Laser hoher Leistung ist sie schon von der Quelle weg ungleich verteilt) der abgestrahlten Energie oder Leistung durch die Optik zwischen Quelle und Ziel mehr oder weniger (noch zusätzlich) verzerrt, so dass gebietsweise mehr oder weniger Energie auf eine Messfläche, oder auf das Ziel auftrifft. Um diesen Vorgang zu erfassen, ist die Lichtspotbeurteilung allein aber ungenügend und die Messung weiterer Eigenschaften an einem folgenden Puls für den vorangegangenen nicht mehr aussagekräftig. Das erfinderische Verfahren geht davon aus, dass die Energie des Lichtspots am exaktesten gemessen werden kann, wenn es gelingt, die eintreffenden Lichtquanten auf möglichst kleinen Flächeneinheiten möglichst genau zu erfassen (also mit möglichst hoher Auflösung der Messfläche) und anschliessend diesen Vorgang über die Gesamtfläche (das ist die Messfläche) aller kleinen Flächeneinheiten durch Bildung des Integrals über alle kleinen Flächen zu ermitteln und gleichzeitig eine Gesamtenergiemessung durchzuführen. Bei so kurzzeitigen Ereignissen wie sie im Nanosekundenbereich vorkommen, ist die Gleichzeitigkeit der Erfassung verschiedener Messwerte mit bekannten Messanordnungen noch nicht durchgeführt worden.

Verfahrensmässig gesehen, wird die Fläche des Lichtspots in einzelne Bildpunkte, sogenannte Pixels, aufgelöst, jeder Pixel wird einzeln gemessen und das Integral über sämtliche Pixels gebildet. Obwohl die Intensität nicht direkt am Pixel messbar ist, ist es vorrichtungsmässig bspw. möglich mit einem CCD (Charge Coupled Device) mit der entsprechenden Ansteuerung die Lichtfläche mit entsprechender Helligkeitsverteilung zu erhalten und gleichzeitig durch eine Gesamtenergiemessung für diesen Lichtspot mittels eines entsprechend ausgebildeten Sensors die Intensität und Divergenz über dem Lichtfleck zu ermitteln. Die Vorrichtung umfasst auch die Mittel zur Auskoppelung des Lichts und die Mittel zur Verarbeitung der Signale des CCD. Auf diese Weise kann über der Fläche x,y die Energieverteilung gemessen werden: dies ergibt dann die oben schon erwähnte Gestalt eines Laserschusses, die man auch als ein Lichtfleck-Intensitätsprofil auffassen kann.

Die Erfindung beruht also im wesentlichen auf der quantitativen Zuordnung der integralen Energie eines ganzen Laserschusses zum erzeugten Lichtfleck, nebst der Erfassung der relativen Leistungs- u/o Energieverteilung über die bestrahlte Fläche. Ein Vorteil daraus sind nebst exakten und gut zu beurteilende Messungen noch erzielbare Synergieffekte bei der Entwicklung, Herstellung, Kalibration und Wartung der Geräte, die mit einem Messgerät mit der erfinderischen Vorrichtung gemessen und justiert werden.

Damit findet die integrale Leistungs- ⁄Energiemessung des gleichen Laserschusses im Justier- und Messgerät mit der Vorrichtung gemäss Erfindung statt, das heisst, dass vorhandene Justier- und Messgeräte einer höheren Nützlichkeit zugeführt werden, wenn sie mit der noch zu diskutierenden Vorrichtung ausgestattet sind.

Gerätetechnisch gelöst wird die Aufgabe durch eine Ergänzung des Strahlungsteilers im Kollimator durch eine bidirektional wirkende Ein-/Auskopplungsoptik, um gleichzeitig die Kamera und den elektronischen Sensor anzusteuern. Die zusätzliche Kopplungsoptik erlaubt also eine quasi simultane (verschachtelte) Tätigkeit zweier Signalempfänger bzw. Signalsender. Erfindungswesentlich ist eine integrale Flächen-Messung der Energie und eine simultane, zusätzliche Leistungsmessung oder Energiemessung des erzeugten Lichtflecks, welche Gleichzeitigkeit der Messungen mit Hilfe einer Ein-/Auskopplungsoptik bewerkstelligt wird. Zur Durchführung der Messungen und Auswertung der Messresultate wird eine das Verfahren ausführende Betriebssoftware benützt.

Mit Hilfe der nachfolgend aufgeführten Figuren wird ein beispielsweises Vorgehen gemäss der erfinderischen Idee eingehend beschrieben.

Fig. 1A zeigt in einer räumlichen Darstellung eine mögliche Energieverteilung eines Laserspots, bzw. Laserschusses.

Fig. 1B zeigt in einer ähnlichen Darstellung wie in Figur 1 einen Laserspot von ungleicher Lichtverteilung auf Flächen gleicher Empfindlichkeit.

Fig. 2 zeigt eine Ausführungsform der Vorrichtung gemäss Erfindung als Blockdiagramm.

Fig. 3 zeigt eine beispielsweise Anordnung in einer Vorrichtung zur Messung eines Laserschusses.

Die wesentlichen Schritte des erfindungsgemässen Verfahrens zur Messung und Auswertung von Lichtfleck-Intensitätsprofilen, hier sind es Laserintensitätsprofile, sind folgende: Aus dem Strahlengang 11" des kurzzeitigen optischen Ereignisses wird ein Teil der Energie ausgekoppelt und die Energiedichte über einer vorzugsweise orthogonal zum Photoneneinfall angeordneten Ebene (also in zwei Raumrichtungen) digitalisiert bzw. quantisiert. Das zur Lichtintensität proportionale Signal jedes Digits bzw. Quants wird gespeichert. Vorrichtungsmässig kann dazu eine CCD-Kamera verwendet werden. Die auftreffende Lichtenergie wird in der CCD-Kamera gespeichert und im CCIR-TV-Verfahren ausgelesen. Die ausgelesenen Signale werden digitalisiert, in einem Computerspeicher gespeichert und zur Weiterverarbeitung bereitgehalten.

Gleichzeitig ist auch die Gesamtenergie, bspw. durch eine Leistungsmessung über dem gespeicherten Lichtfleck ermittelt worden. Vorrichtungsmässig wird eine Auskoppelungsoptik verwendet, mit Hilfe derer ein bestimmter Teil der Energie des Lichtblitzes ausgekoppelt und durch einen Lichtwellenleiter auf einen Sensor geführt wird. Das Sensorsignal wird ebenfalls digitalisiert, in einem Computerspeicher gespeichert und zur Weiterverarbeitung bereit gehalten.

In einem nachfolgenden Verfahrensschritt, wird aus diesen Informationen die Lichtverteilung auf einer Fläche gegenüber einer zu dieser Fläche nicht parallelen (vorzugsweise senkrechten) Achse abgebildet. Dieses eine Vorgehen liefert das gesuchte Intensitätsprofil, also die Energieverteilung über die Messfläche die bei dem kurzzeitigen optischen Ereignis eingefallen ist.

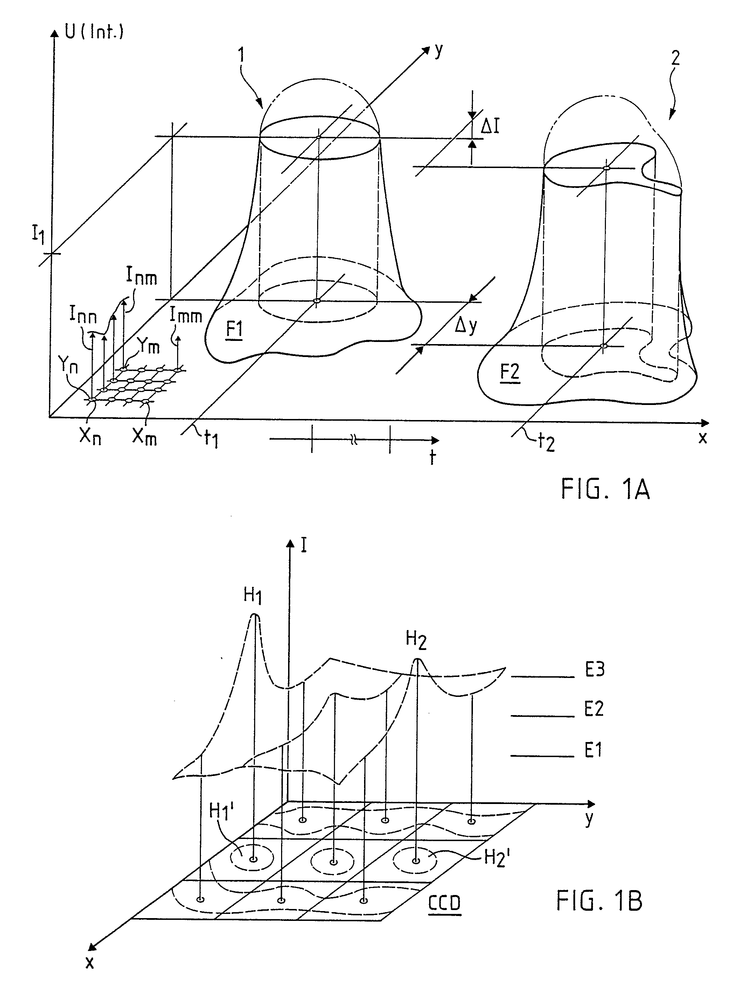

Figur 1A zeigt recht anschaulich, wie die "Gestalt" des kurzzeitigen Ereignisses beispielsweise aussehen kann. Es sind darin zwei Licht blitze 1 und 2 dargestellt, die zu einem Zeitpunkt $t_1$ und $t_2$ generiert wurden. Die x,y-Ebene entspricht der Messfläche (ist sie aber nicht selber) und auf einer zu dieser Ebene senkrechten Achse ist die Signalspannung als Funktion der Intensität aufgetragen. Die Fläche F1 entspricht dem Lichtfleck des ersten Blitzes zum Zeitpunkt $t_1$, da es sich um einen kurzzeitigen Effekt handelt, kann er hier mit einem Zeitpunkt statt einem Zeitintervall bezeichnet werden, und die Fläche F2 entspricht dem Lichtfleck des zweiten Blitzes zum Zeitpunkt $t_2$. Beide Blitze stammen bspw. aus der gleichen Quelle und sind für dieses Beispiel zwei nicht zu rasch aufeinanderfolgende Blitze. Zugunsten einer guten Anschaulichkeit sind sie augenfällig verschieden. Die Verschiedenheit kann auf Grund einer kurzfristigen Einwirkung auf das System (bspw. Rauschen im Ensemble aller Blitze, aber auch Alterung und Temperaturdifferenzen, bspw. eine Erwärmung des Gerätes) bewirkt worden sein, es kann auch von einem eben eingetretenen Systemfehler herrühren und in dieser Form bestehen bleiben. Für exakte Messungen müssen beide Möglichkeiten detektierbar sein.

Angenommen man betrachtet lediglich den Lichtfleck, also die Fläche F1 und F2, so könnte man lediglich eine Verschiebung des Spots um y und eine Aenderung der Grenzen feststellen. Dies ist aber erst die Projektion des Blitzes, nicht seine Gestalt. Ueber die Intensität und deren Verteilung kann auf Grund der Beurteilung von F1 und F2 noch nichts Gültiges ausgesagt werden. Damit scheiden aber alle Vergleichsmethoden aus, die sich auf die Beurteilung eines Lichtflecks abstützen. Weder die Gesamtenergie noch die Energieverteilung können so exakt gemessen werden.

Wird nun die x,y-Ebene digitalisiert, wie dies in der linken Ecke des Diagramms der Figur 1 mit einem Pixelfeld von $X_n,Y_n$ bis $X_m,Y_m$ dargestellt ist, so kann die photoelektrische Spannung jedes Pixels einer dafür geeigneten Vorrichtung gemessen werden und man erhält die Gestalt, wie in Figur 1A abgebildet. Zur Demonstration ist nebst der verschiedenen Energieverteilung auch ein Intensitätsunterschied von delta I eingezeichnet. Selbstverständlich kann auch eine andere Darstellungsform die Gestalt ausdrücken, bspw. mittels einer Farbzonendarstellung mit aquiintensen Zonen. Die Genauigkeit der Messung hängt jetzt im wesentlichen noch von der Auflösung des photoelektrischen Mittels bzw. von der Pixeldichte ab, dann natürlich noch von der Linearität der Kamera und von der Messung des Integrals durch den Sensor.

Ein Mittel zur Durchführung des vorgeschlagenen Vorgehens umfasst im wesentlichen:
- eine photoelektrische Einrichtung mit einem Feld von ansteuerbaren Pixels, bspw. eine CCD-Kamera,
- eine photoelektrische Einrichtung zum Messen von Lichtenergie,
- ein Mittel zum Auskoppeln eines Teils der in die Vorrichtung einfallenden Energie des kurzzeitigen Vorganges und zum Teilen dieses Energieanteils und zum Heranführen dieses in zwei Teilen vorliegenden Energieanteils einerseits an die photoelektrische Einrichtung mit dem Feld mit den ansteuerbaren Pixels und andererseits an die die Gesamtenergie messende photoelektrische Einrichtung,
- sowie eine Einrichtung zum gleichzeitigen Steuern der Abläufe.

Ein Verfahren zum Betrieb der Vorrichtung leitet sich aus dem Messverfahren gemäss Erfindung ab und wird vorzugsweise in Form eines Computerprogrammes benützt.

In einer Erweiterung des Verfahrens können dynamische Unlinearitäten mit entsprechenden Kalibrierwerten im Rechnerprogramm kompensiert werden. Aenderungen durch Alterung, Temperatur, Exemplarstreuung können mit spiegelsymmetrischen Kalibrierwerten (Kompensationswerte, die wie Auslöschwerte wirken) kompensiert werden. Ebenfalls können Wellenlängendifferenzen im Spektralbereich durch entsprechende Kalibrierfaktoren korrigiert werden. Ferner können Ausbreitungskriterien der diversen Wellenlängen (Laufzeiten, Dämpfung) durch einen Frequenzwandler ausgeglichen werden.

Für verschiedene Wellenlängen können eine Mehrzahl von Sensoren vorgesehen sein. Ein weiterer Verfahrensschritt besteht darin, dass der bidirektionale Betrieb der Lichtwellenleiter durch wellenlängen unabhängige Koppler erfolgt. Diese entspricht je nach dem einer Breitband- oder Schmalband-Ausführung. Auch kann durch Rechnerunterstützung eine halb- oder vollautomatische Messungen erfolgen.

**Figur 1B** zeigt ein kurzzeitiges Ereignis der besprochenen Art, bei dem in der zur CCD-Ebene nicht parallelen Richtung die Energiequantenzahl (Photonenzahl) aufgetragen ist. Eingezeichnet sind zwei Hotspots $H_1$ und $H_2$, das sind Zonen höherer Energiedichte, wie sie bei einem Laser mit seinen verschiedenen Moden vorkommen. Solche Hotspots sind mit einer herkömmlichen Lichtfleckmessung unter Umständen feststellbar aber nicht genau messbar. Durch die Messung der Gesamtenergie nebst der Messung der Energieverteilung, können diese Zonen genau beurteilt werden. Zonen gleicher Quantenzahl pro Flächeneinheit ergeben die Flächen (Ebenen) $E_1$, $E_2$, $E_3$ und so fort.

Es sind aber auch andere Darstellungformen zum Aufzeigen der gesuchten Gestalt geeignet, wie bspw. die zweidimensionale Falschfarbentechnik oder die Technik der Aequipotentiallinien, wie sie in der CCD-Ebene in Figur 1B eingezeichnet sind.

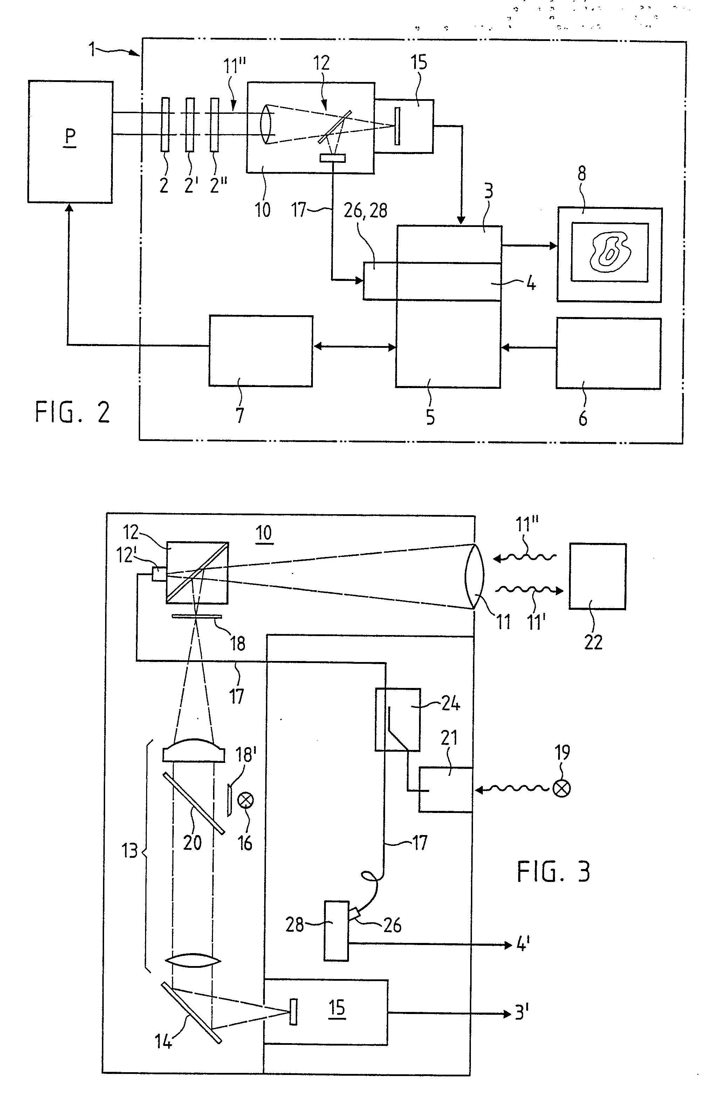

**Figur 2** zeigt in einer übersichtlichen Blockdarstellung einen Laserprüfplatz mit den wesentlichen Geräteteilen oder Gerätefunktionen. Die Vorrichtung zeichnet sich dadurch aus, dass über Strahlengänge eine die Lichtfläche quantisierende Einrichtung und eine die Lichtleistung messende Einrichtung durch eine bidirektional wirkende Ein bzw. Auskopplungsoptik so miteinander verbunden sind, dass gleichzeitig die quantisierende Einrichtung und die die Lichtleistung messende Einrichtung angesteuert werden. Dies ist nur ein Beispiel einer Vorrichtung zur Messung von kurzzeitigen optischen Ereignissen. Mit P ist ein Prüfling bezeichnet, der mit der Vorrichtung 1 gemessen werden soll. Dazu ist er nach bekanntem Vorgehen zur Messvorrichtung ausgerichtet worden (Fluchten der optischen Achsen). Der Prüfling ist bspw. ein YAG-Laser mit einer Schussdauer zwischen 8ns und 50ns. Es sind also sehr kurze Lichtereignisse, die gemessen werden sollen.

Durch eine Anzahl Dämpfungsfilter 2,2′,2″ gelangt die vom Laser über den Strahlengang 11″ abgegebene Lichtenergie in einen Kollimator 10. Im Kollimator wird das Lichtenergiebündel an einer Spliteinrichtung 12 (bspw. ein Teilprisma) geteilt. Der eine (bestimmte) Teil der Photoenergie wird einer CCD-Kamera 15 zur Messung der Lichtverteilung zugeführt und der andere (bestimmte) Teil der Photoenergie wird einer Leistungsmesseinrichtung 17,26,28,4 zur Messung des Energieintegrals zugeführt. Das Splitverhältnis (Lichtenergie-Teilungsverhältnis) der Spliteinrichtung ist fest, jede Spliteinrichtung ist bezüglich ihres Teilungsverhältnis geeicht.

Ein Rechner 5 mit dem Betriebsprogramm steuert den ganzen Ablauf. Im Frame-Grabber 3 wird der Pixelarray und im Leistungsmesser 4 die Gesamtenergie ausgewertet und gespeichert. Auf einem Monitor (bspw. Farbmonitor) 8 kann der Kurzzeitvorgang sichtbar gemacht werden. Der Prüfling P wird durch den Rechner 5 gesteuert, sodass die Schussauslösung in das Betriebsregime eingebunden ist. Eine Schnittstelle 7 verbindet die Lasersteuerung mit dem Rechner. Vollständigkeitshalber ist noch ein Block mit der Peripherie 6, wie Tastatur, Bildschirm, Drucker etc. eingezeichnet.

Diese grundlegende Ausführungsform kann zur Ausführung von den oben (S.10/11) angegebenen zusätzlichen Verfahrensschritten:

- für verschiedene Wellenlängen des Lichts mehrere Sensoren 26/28 aufweisen,
- einen eingebauten Monitor 8 aufweisen,
- externen Rechner benützen, um Anzeigen, Bedienelemente und Monitor zu ersetzen,
- eine die zu messende Lichtquelle simulierende Laserquelle 19 (Halbleiterlaser) im Strahlengang aufweisen, um Einstellvorgänge an der Vorrichtung zu erleichtern. Damit muss der Operator ausserhalb der Messzeit nicht mit gefährlichen Lichtintensitäten hantieren, die in dieser Form für Einstellarbeiten und Reparaturen usw. ohnehin nicht nötig sind.
- Es kann ferner eine Strichplatte 18 oder 18′ ohne Mittenteilung verwendet werden, um eine Schattenwirkung im Intensitätsprofil (Gestalt) zu vermeiden.
- An den Koppel- und Verbindungsstellen der Lichtleiter 26,17,21,24,12′ können durch Spleissungen der Faser oder an End- und Koppelstellen durch Schrägstellen der Austrittsflächen Reflexionen verhindert werden.

Mehr ins Detail geht **Figur 3**, die die wesentlichen Teile der Vorrichtung in der Umgebung des eingangs erwähnten Mess- und Justiergerätes zeigt. Die Funktion eines Mess- und Justiergerätes dieser Art ist in der erwähnten Publikation (EP-0'048'015) beschrieben, sodass an dieser Stelle lediglich auf das Intensitätsprofil-Mess- und-Analysegerät eingegangen wird. Ferner ist zu beachten, dass das in Figur2 dargestellte Mess- und Justiergerät lediglich als schematisches Bild eines solchen zu begreifen ist und die Anordnung in Figur 3 von Figur 2 verschieden sein kann.

Ein Messkollimator 10 mit einer Frontoptik 11, weist in seinem Strahlengang ein Strahlungsteilerprisma 12 auf, von wo ein Teilstrahl durch eine Strichplatte 18 über eine Zwischenoptik 13 (samt einer internen Lichtquelle 16, einer Strichplatte 18′ und eines Teilerspiegels 20, die zur Ausrichtung bzw. Justierung der optischen Achsen dienen und fakultativ sind) auf einen Umlenkspiegel 14 und von dort auf eine CCD-Kamera 15 fällt. Dort wird der Lichtspot durch den Speichervorgang quantisiert. Die Energie für diesen zu quantisierenden Lichtspot wird aus einer bidirektional arbeitende Ein-/Auskoppelungsoptik 12′ und über einen anderen Teilstrahl via einen Lichtleiter 17 und eine Auskopplungsoptik 26 einer Messeinheit 28 zugeführt. Die eine Einkopplungsoptik 12′ ist in der Kollimatoreinheit untergebracht, allerdings könnte sie auch an einem anderen Ort innerhalb des Gerätes untergebracht sein.

Ueber den Lichtleiter 17 wird der eine Teilstrahl auf einen Sensor 26 in der Leistungsmesseinrichtung 28 (bzw. 4 in Figur 2) geführt und umgesetzt. An den Anschlüssen 3′ und 4′ sind stehen Signale zur Auswertung in den Bauteilen 3 und 4 gemäss Figur 2 bereit.

Wie oben schon erwähnt, kann eine die zu messende Lichtquelle simulierende Laserquelle 19 (Halbleiterlaser) im bspw. Strahlengang 21,24,17,12′ der Optik 12 u.a. Einstellvorgänge an der Vorrichtung erleichtern. Von dieser Strahlungsquelle aus können Teilstrahlen zu einer ausserhalb der Messvorrichtung liegenden Empfangseinrichtung 22 (bspw. ein Prüfling) geleitet werden, was durch den Pfeil 11′ angedeutet wird. Die durch den Pfeil 11″ angezeigten, einfallenden Strahlen stammen jedoch nicht von der Einrichtung 24, sondern vom Prüfling P, der in diesem Beispiel ein Laser ist. Zwischen der Messvorrichtung und der Einkopplungsvorrichtung 24 wird ein Teil der Messstrecke simuliert, zum Beispiel durch ein optoelektronisches Zeitglied 21, das zwischen die Laserquelle 19 und die dem Lichtleiter 17 das Laserlicht zuführende Einkopplungsvorrichtung 22 geschaltet ist. Bis anhin war es notwendig, aus einem externen Laser, durch eine spezielle Optik un damit durch einen eigens dafür vorgesehenen Strahlengang in der Messvorrichtung einen Teilstrahl einer solchen Einkopplungsvorrichtung 24 (bspw. einem Prüfling) zuzuleiten, was bei der hier diskutierten Messvorrichtung entfällt. Damit muss der Operator ausserhalb der Einsatzzeit der Messvorrichtung nicht mit gefährlichen Lichtintensitäten aus einem Laser hantieren, die in dieser Intensität für Einstellarbeiten und Reparaturen usw. ohnehin nicht nötig sind.

Diese Anordnung bewirkt, dass gleichzeitig mit der Aufnahme des Blitzes durch die CCD-Kamera eine Leistungsmessung desselben Blitzes stattfindet. Die jeweiligen Anteile, die auf die CCD-Kamera und auf die Leistungsmesseinrichtung 28 fallen, sind durch das Teil prisma bekannt, sodass von der Leistungsmessung auf die CCD Flächenmessung und zurück geschlossen werden kann. Damit hat man den Wert der Gesamtenergie durch den Sensor 26 zur Grösse der bestrahlten Fläche mittels der CCD-Kamera gleichzeitig erfasst. Aus den beiden Informationen, die durch die Quantisierung gewonnene Helligkeitsverteilung **und** der Wert der Gesamtenergie des Blitzes lässt sich die Gestalt von Laserblitzen bestimmen, wie sie als Beispiel in den Figuren 1A und 1B abgebildet sind.

## Ansprüche

1. Verfahren zur Messung und Auswertung eines kurzzeitigen optischen Ereignisses, dadurch gekennzeichnet, dass zur Herstellung von Lichtfleck-Intensitätsprofilen aus dem Strahlengang des kurzzeitigen optischen Ereignisses ein Teil der Energie ausgekoppelt und die Energiedichte über einer den Photoneneinfall (vorzugsweise orthogonal angeordnet) aufnehmenden Ebene (also in zwei Raumrichtungen) digitalisiert bzw. quantisiert und von einem weiteren Teil der Energie desselben Ereignisses gleichzeitig die Lichtleistung für die Zuordnung zum selben Ereignis ermittelt wird.

2. Verfahren nach Anspruch 1, dadurch gekennzeichnet, dass das zur Lichtintensität proportionale Signal jedes Digits bzw. Quants gespeichert wird und mit der Gesamtenergie über dem gespeicherten Lichtfleck in Bezug gebracht wird.

3. Verfahren nach Anspruch 2, dadurch gekennzeichnet, dass aus diesen Informationen die Energieverteilung auf einer Fläche gegenüber einer zu dieser Fläche nicht parallelen Achse abgebildet wird und damit das gesuchte Intensitätsprofil, also die Energieverteilung über die Messfläche die bei dem kurzzeitigen optischen Ereignis eingefallen ist, darstellt.

4. Verfahren nach Anspruch 1,2 oder 3 dadurch gekennzeichnet, dass dynamische Unlinearitäten mit entsprechenden Kalibrierwerten in einem Rechnerprogramm kompensiert werden.

5. Verfahren nach Anspruch 1,2 oder 3, dadurch gekennzeichnet, dass Aenderungen durch Alterung, Temperatur, Exemplarstreuung mit spiegelsymmetrischen Kalibierwerten kompensiert werden.

6. Verfahren nach Anspruch 1,2 oder 3, dadurch gekennzeichnet, dass Wellenlängendifferenzen im Spektralbereich durch entsprechende Kalibierfaktoren korrigiert werden.

7. Verfahren nach Anspruch 1,2 oder 3, dadurch gekennzeichnet, dass Ausbreitungskriterien der diversen Wellenlängen (Laufzeiten, Dämpfung) durch einen Frequenzwandler ausgeglichen werden.

8. Verfahren nach Anspruch 1,2 oder 3, dadurch gekennzeichnet, dass für verschiedene Wellenlängen eine Mehrzahl von Sensoren vorgeshen sind.

9. Verfahren nach Anspruch 1,2 oder 3, dadurch gekennzeichnet, dass der bidirektionale Betrieb der Lichtwellenleiter (Faser 17) durch wellenlängenunabhängige Koppler (24) erfolgt (Breitband-/Schmalband-Ausführung).

10. Verfahren nach den Ansprüchen 1 bis 9, dadurch gekennzeichnet, dass durch Rechnerunterstützung halb- und vollautomatische Messungen erfolgen können.

11. Vorrichtung zur Durchführung des Verfahrens nach Anspruch 1, dadurch gekennzeichnet, dass über Strahlengänge eine die Lichtfläche quantisierende Einrichtung (15) und eine die Lichtleistung messende Einrichtung (26,28) durch eine bidirektional wirkende Ein-/Auskopplungsoptik (12′) durch optische Mittel (17) so miteinander verbunden sind, dass gleichzeitig die quantisierende Einrichtung und die die Lichtleistung messende Einrichtung angesteuert werden.

12. Vorrichtung nach Anspruch 11, dadurch gekennzeichnet, dass für verschiedene Wellenlängen des Lichts mehrere Sensoren (15;26,28) vorgesehen sind.

13. Vorrichtung nach einem der Ansprüche 11 oder 12, dadurch gekennzeichnet, dass sie einen eingebauten Monitor (8) aufweist.

14. Vorrichtung nach einem der Ansprüche 11 - 13, dadurch gekennzeichnet, dass Anzeigen, Bedienelemente, der Monitor durch einen externen Rechner ersetzbar sind.

15. Vorrichtung nach einem der Ansprüche 11 - 14, dadurch gekennzeichnet, dass ein die zu messende Lichtquelle simulierende Laserquelle (Halbleiterlaser 19) im Strahlen gang (21,24,17,12′12) vorgesehen ist, um Einstellvorgänge and der Vorrichtung zu erleichtern.

16. Vorrichtung nach einem der Ansprüche 11 - 15, dadurch gekennzeichnet, dass eine Strichplatte ohne Mittenteilung vorgesehen ist, um eine Schattenwirkung im Intensitäts-Profil (Gestalt) zu vermeiden.

17. Vorrichtung nach einem der Ansprüche 11 - 16, dadurch gekennzeichnet, dass zur Verhinderung von Reflexionen an Koppel- und Verbindungsstellen Spleissungen der Faser vorgesehen sind.

18. Vorrichtung nach einem der Ansprüche 11 - 16, dadurch gekennzeichnet, dass an End- und Koppelstellen durch Schrägstellen der Austrittsflächen Reflexionen verhindert werden.

FIG. 1A

FIG. 1B

FIG. 2

FIG. 3